# FASCICULE DE BREVET EUROPEEN

(11) **EP 1 235 729 B1**
(45) Date de publication et mention de la délivrance du brevet: **02.03.2005**
(21) Numéro de dépôt: 00977632.9
(22) Date de dépôt: 08.11.2000
(51) Int. Cl.: B65G 47/71, B29C 49/42

(54) **SYSTEME DE CONVOYAGE D'ENTITES DISCRETES COMPORTANT UN DISPOSITIF DE REPARTITION ET INSTALLATION DE SOUFFLAGE DE RECIPIENTS MUNIE D'UN TEL SYSTEME**
TRANSPORTVORRICHTUNG VON EINZELTEILEN MIT EINER VERTEILUNGSVORRICHTUNG UND BLASFORMANLAGE ZU HERSTELLUNG VON BEHÄLTERN MIT EINER SOLCHEN TRANSPORTVORRICHTUNG
SYSTEM FOR CONVEYING DISCRETE ITEMS COMPRISING A DISTRIBUTING DEVICE AND CONTAINER BLOW-MOULDING INSTALLATION EQUIPPED WITH SAME

(30) Priorité: 15.11.1999 FR 9914267
(43) Date de publication de la demande: 04.09.2002
(73) Titulaire: SIDEL, 76053 Le Havre Cedex (FR)
(72) Inventeur: GALLONI, Bruno Sidel, F-76053 le Havre Cedex (FR); PELLEGATTA, Jean-Louis Sidel, F-76053 le Havre Cedex (FR)
(74) Mandataire: Siloret, Patrick
(86) Numéro de dépôt international: PCT/FR2000/003107
(87) Numéro de publication internationale: WO 2001/036306

(56) Documents cités:
- DE-A- 2 217 733
- DE-A- 19 654 350
- FR-A- 2 709 264
- US-A- 4 467 908
- US-A- 4 596 107

## Description

L'invention se rapporte au domaine des systèmes de convoyage d'entités discrètes, c'est-à-dire de convoyage d'éléments individuels.

L'invention trouvera application dans tout système de convoyage dans lequel on veut diviser un flux d'entités pour les répartir entre deux organes aval.

Une telle répartition se trouve par exemple nécessaire lorsque, dans une installation en ligne, une machine à haute cadence est suivie de plusieurs machines de plus faible cadence qui sont utilisées en parallèle pour effectuer une même opération.

L'invention sera plus particulièrement décrite dans le cadre de son application à une installation de soufflage de récipients en matériau thermoplastique dans laquelle le récipient est obtenu par soufflage d'une préforme précédemment réalisée par injection.

Le demandeur fabrique de telles installations qui comportent une unité de soufflage rotative capable de produire plus de 50000 bouteilles par heure.

Pour de telles cadences, il est apparu souhaitable de prévoir que la sortie des bouteilles de l'unité de soufflage soit rapidement divisée en deux flux parallèles.

En effet, à de telles cadences, le convoyage des bouteilles à la sortie de l'installation de soufflage nécessiterait des vitesses linéaires de déplacement de bouteilles particulièrement importantes. On connaît du document US 4,467,908, un dispositif permettant la sortie sur deux flux parallèles. Toutefois, ce dispositif n'est adapté qu'aux machines d'extrusion soufflage fonctionnant à des cadences relativement faibles, de l'ordre de 500 bouteilles par heure, et donc pas aux cadences des machines actuelles. Ceci s'explique par la complexité structurelle de ce dispositif qui se compose d'une roue d'entrée, de deux roues d'extraction, et de différents moyens de préhension, autant de moyens qui s'opposent à l'augmentation de la vitesse recherchée (à cause des risques non négligeables de blocages ou de dysfonctionnements).

L'invention a donc pour but de proposer un dispositif simple et fiable capable d'assurer la séparation en deux d'un flux initial d'entités discrètes à des cadences importantes.

Dans ce but, l'invention propose un système de convoyage d'entités discrètes comportant un dispositif de répartition comprenant une roue d'entrée qui est entraînée en rotation de manière continue autour de son axe et qui est pourvue à sa périphérie d'une série de supports dont chacun est apte à recevoir une entité, le dispositif de répartition permettant de répartir sur un premier organe de sortie qui récupère, au-delà du point de tangence, les entités précédemment saisies par des éléments secondaires de préhension d'une roue d'extraction et sur un second organe de sortie qui récupère les entités précédemment saisies par les moyens primaires de préhension de la roue d'entrée.
caractérisé en ce que :
certains desdits supports sont associés à un élément primaire de préhension qui est mobile sur la roue d'entrée entre une position escamotée et une position de préhension dans laquelle il est susceptible de saisir une entité présente sur le support associé, et le dispositif de répartition comporte une seule roue d'extraction qui est tangente à la roue d'entrée et qui est entraînée en rotation autour de son axe avec la même vitesse tangentielle que la roue d'entrée, et des moyens de commande qui sont susceptibles de provoquer, entre une zone de chargement et le point de tangence des deux roues, le déplacement de chacun des éléments primaires de préhension vers sa position de préhension de manière que l'élément considéré saisisse une entité reçue sur le support associé, les éléments secondaires de préhension qui sont portés par la roue d'extraction étant prévus pour saisir, au point de tangence, les entités non saisies par un élément primaire de préhension.

Selon d'autres caractéristiques de l'invention :
- chaque élément primaire de préhension est commandé vers sa position de préhension à chaque tour de la roue d'entrée, entre la zone de chargement et la zone de tangence, et la roue d'extraction comporte des éléments secondaires de préhension uniquement en correspondance avec les supports de la roue d'entrée qui ne sont pas associés à un élément primaire de préhension ;
- chaque élément primaire de préhension de la roue d'entrée est ramené vers sa position escamotée au niveau d'une zone de déchargement des entités vers le second organe de sortie ;
- les éléments secondaires de préhension sont agencés de manière fixe à la périphérie de la roue d'extraction ;
- les éléments secondaires de préhension de la roue d'extraction sont mobiles chacun entre une position escamotée et une position de préhension ; ils sont associés chacun à un support apte à supporter au moins en partie, entre la fin des moyens de guidage et le point de tangence, une entité non saisie par les éléments primaire de préhension, et les éléments secondaires de préhension sont commandés pour saisir une telle entité sensiblement au niveau du point de tangence des deux roues ;
- chaque élément secondaire de préhension de la roue d'extraction est ramené vers sa position escamotée au niveau d'une zone de déchargement des entités vers le premier organe de sortie ;
- le système est prévu pour convoyer des récipients dont le col comporte au moins une collerette principale en excroissance radiale, et les supports de l'une au moins des roues d'entrée ou d'extraction sont formés chacun par le bord d'une encoche qui est taillée à la périphérie de la roue et dans laquelle le col du récipient est engagé au moins partiellement, la collerette venant en appui sur le bord de l'encoche ;
- le dispositif comporte, entre une zone de chargement et la zone de tangence des deux roues, des moyens de guidage fixes qui maintiennent les entités sur leur support de la roue d'entrée ;
- les éléments primaires et/ou secondaires de préhension sont réalisés sous la forme de pinces aptes à saisir le col du récipient au-dessus de la collerette principale ;
- les éléments de préhension mobiles sont montés à coulissement radial sur la roue ;
- les pinces sont réalisées en une seule pièce en matière déformable élastiquement de manière à pouvoir s'encliqueter sur le col du récipient ;
- la roue d'extraction comporte à sa périphérie une série d'évidements qui sont disposés de telle sorte que, à chaque passage au point de tangence des deux roues, un support de la roue d'entrée qui comporte une élément primaire associé se trouve radialement en regard d'un évidement de la roue d'extraction.
- le dispositif de répartition est alimenté en entités par un organe d'alimentation qui comporte au moins un bras de transfert rotatif ;
- le bras de transfert transporte simultanément deux entités qui sont amenées respectivement sur deux supports agencés consécutivement à la périphérie de la roue d'entrée du dispositif de répartition ;
- de deux supports consécutifs de la roue d'entrée, seul un est associé à un élément primaire de préhension de telle sorte que le système dirige les entités alternativement vers le premier ou vers le second organe de sortie ;
- le premier organe de sortie est réalisé sous la forme d'une gouttière de sortie ; et
- le second organe de sortie comporte une roue à encoches.

L'invention propose aussi une installation de soufflage de récipients en matière thermoplastique, caractérisée en ce qu'elle comporte, en aval d'une unité de soufflage, un système de convoyage de récipients incorporant l'une quelconque des caractéristiques précédentes.

D'autres caractéristiques et avantages de l'invention apparaîtront à la lecture de la description détaillée qui suit ainsi que dans les dessins annexés dans lesquels :
- la figure 1 est une représentation schématique en vue de dessus d'un dispositif de répartition conforme aux enseignements de l'invention, le dispositif étant à titre d'exemple intégré dans un système de convoyage situé en aval d'une unité de soufflage de récipients.
- la figure 2 est une vue schématique en coupe selon la ligne 2-2 de la figure 1 ;
- la figure 3 est une vue schématique en coupe selon la ligne 3-3 de la figure 2 ; et
- la figure 4 est une vue schématique en perspective avec arrachement illustrant le montage et la commande en coulissement radial d'un élément de préhension.

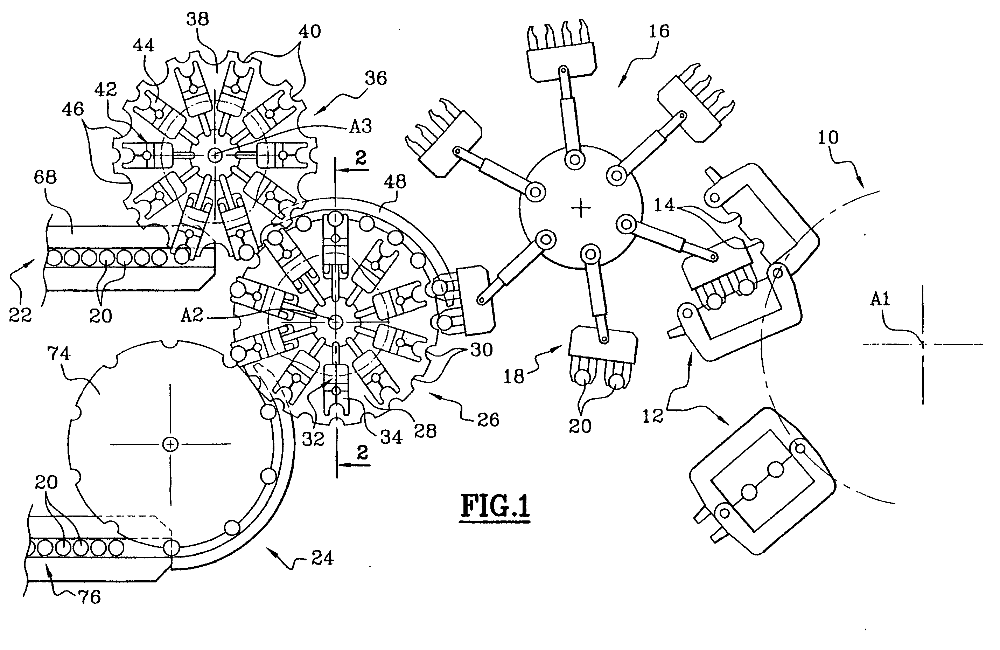

On a illustré sur la figure 1, de manière schématique et partielle, une partie d'une installation de soufflage de récipients en matière thermoplastique. Il s'agit plus particulièrement d'une machine de soufflage de récipients, tels que des bouteilles, à partir de préformes précédemment réalisées par injection d'un matériau thermoplastique tel que le polyéthylène téréphtalate (PET). Les préformes présentent sensiblement la forme d'un tube dont l'extrémité inférieure est fermée et dont l'extrémité supérieure ouverte présente exactement la forme finale du récipient. Le col présente ainsi généralement, à sa base, au moins une collerette radiale externe qui est utilisée pour assurer le transport de la préforme, puis du récipient.

Pour pouvoir être moulée à la forme du récipient, la préforme est chauffée dans un four de conditionnement thermique et elle est amenée dans un moule de soufflage. Une fois la préforme enfermée dans le moule, seul le col dépassant à l'extérieur de celui-ci, on insuffle dans la préforme de l'air sous haute pression pour que le matériau viennent épouser les parois du moule. Le moule est ensuite ouvert et le récipient est récupéré par un système de convoyage.

Dans l'exemple illustré à la figure 1, la machine de soufflage comporte une unité de soufflage rotative 10 dans laquelle une série de moules de soufflage 12 sont disposés à la périphérie d'un carrousel animé d'un mouvement de rotation continue d'axe A1.

Les moules 12 sont réalisés en deux parties et peuvent s'ouvrir pour permettre l'introduction des préformes et pour permettre l'extraction des récipients une fois soufflés.

La machine illustrée sur la figure 1 est une machine dite "bi-empreinte" dans laquelle chaque moule 12 comporte deux cavités 14 destinées chacune à recevoir une préforme. Ainsi, à chaque tour du carrousel, on introduit dans chaque moule deux préformes à la fois, de sorte que deux récipients sont moulés simultanément dans chaque moule. Une fois les récipients moulés, le moule 12 est ouvert et les récipients sont récupérés par un système de convoyage.

Dans la machine de la figure 1, le système de convoyage comporte une étoile de transfert 16 pourvue d'une série de bras de transferts 18 qui permettent de venir saisir les deux récipients 20 qui viennent d'être soufflés dans un même moule 12. Une telle étoile de transfert 16 est par exemple du type de celles qui équipent les machines "bi-empreintes" déjà commercialisées par le demandeur et elle permet d'évacuer les récipients 20 du moule 12 sans arrêter ni même ralentir le carrousel qui porte les moules 12.

Le système de convoyage illustré sur la figure 1 comporte un dispositif de répartition qui permet de diviser le flux des récipients produits en deux flux dont chacun correspond à un organe de sortie 22, 24 de la machine.

Le dispositif de répartition selon l'invention comporte tout d'abord une roue d'entrée 26 qui est entraînée en rotation de manière continue autour de son axe A2. Par commodité, on considèrera le cas où l'axe A2 est vertical. La roue d'entrée 26 comporte donc un plateau horizontal circulaire 28 qui est pourvue à sa périphérie d'une série d'encoches 30. Dans l'exemple choisi, les encoches 30 sont réparties angulairement de manière régulière autour de l'axe A2.

Les encoches 30 sont sensiblement semi-circulaires et présentent un diamètre sensiblement égal au diamètre du col des récipients 20 à convoyer. En réalité, ces encoches peuvent présenter un profil s'écartant légèrement d'un simple demi-cercle. Chaque encoche est destinée à permettre l'engagement radial au moins partiel du col d'un récipient de telle sorte que la collerette de celui-ci vienne en appui sur le bord de l'encoche 30, la partie du plateau 28 qui forme le bord de l'encoche 30 servant ainsi de support au récipient 20 considéré. Le corps du récipient 20 s'étend alors en dessous du niveau du plateau 28.

Dans l'exemple illustré, le plateau 28 de la roue d'entrée 26 est donc conçu comme une roue à encoches de type connu mais on pourrait prévoir de réaliser les supports de récipients sous une autre forme.

La roue d'entrée 26 comporte par ailleurs des éléments de préhension 32 qui sont aptes à saisir un récipient par le col et qui sont montés à coulissement sur le plateau 28 selon une direction radiale par rapport à l'axe A2. Les éléments de préhension 32 sont par exemple réalisés sous la forme de pinces 34. Comme cela sera décrit ci-après, les pinces 34 peuvent ainsi être commandées radialement entre une position escamotée radialement vers l'intérieur et une position de préhension dans laquelle la pince 34 est susceptible de venir s'encliqueter sur le col d'un récipient reçu au niveau d'une encoche 30 du plateau 28. Dans l'exemple illustré, la roue d'entrée 26 est équipée de telle sorte qu'une encoche 30 sur deux est associée à un élément de préhension.

Le dispositif de répartition comporte par ailleurs une roue d'extraction 36 qui est tangente à la roue d'entrée 26 et qui est elle aussi entraînée en rotation autour de son axe A3 de telle sorte que les deux roues possèdent la même vitesse tangentielle à leur point de tangence. De préférence, les deux roues ont le même diamètre et donc la même vitesse angulaire.

Dans l'exempte illustré, la roue d'extraction 36 est identique à la roue d'entrée 26, de telle sorte qu'elle comporte elle aussi un plateau rotatif 38 muni d'encoches 40, ainsi que des éléments de préhension 42 munis de pinces 44. Toutefois, les encoches 40 de la roue d'extraction 36 sont deux fois moins nombreuses que celles de la roue d'entrée 26 et leur espacement sur la circonférence de la roue est le double de celui qui sépare les encoches 30 de la roue d'entrée. Entre deux encoches 40 successives, le plateau 38 de la roue d'extraction 36 présente un évidement 46 qui, dans l'exemple illustré, est de forme semi-circulaire. Les évidements 46 sont en tous cas de profondeur supérieure à la profondeur des encoches 40.

Sur la roue d'extraction 36, chaque encoche 40 est associée à un élément de préhension 42. Au contraire, les évidements 46 ne sont associés à aucun élément de préhension.

Selon le mode de réalisation illustré, les éléments de préhension 42 de la roue d'extraction 36 sont mobiles radialement par rapport à l'axe A3 entre une position escamotée et une position de préhension.

Les deux roues d'entrée 26 et d'extraction 36 sont synchronisées de telle sorte que lorsqu'une encoche 40 de la roue d'extraction se trouve au point de tangence des deux roues, elle se trouve exactement en regard d'une encoche 30 de la roue d'entrée qui n'est pas associée à un élément de préhension 32. Au contraire, lorsque la roue d'entrée 26 occupe une position angulaire telle que c'est une de ses encoches 30 associée à un élément de préhension 32 qui se présente au point de tangence, cette encoche 30 se trouve juste en regard d'un des évidements 46 de la roue d'extraction 36.

Enfin, le dispositif de répartition selon l'invention comporte aussi un guide circulaire 48 qui est disposé autour de l'axe A2 à la périphérie de la roue d'entrée 26. Le guide est fixe et il est disposé de manière à empêcher les récipients de s'échapper des encoches 30. Le guide 48 s'étend donc angulairement entre une zone de chargement des récipients 20 sur la roue d'entrée 26 et la zone de tangence des deux roues 26, 36. Il est disposé à un niveau légèrement supérieur à celui du plateau 28 et il est prévu pour coopérer avec le col des récipients qui, entre la zone de chargement et la zone de tangence, se trouvent prisonniers radialement entre le guide 48 et le fond de l'encoche 30 dans laquelle ils sont reçus.

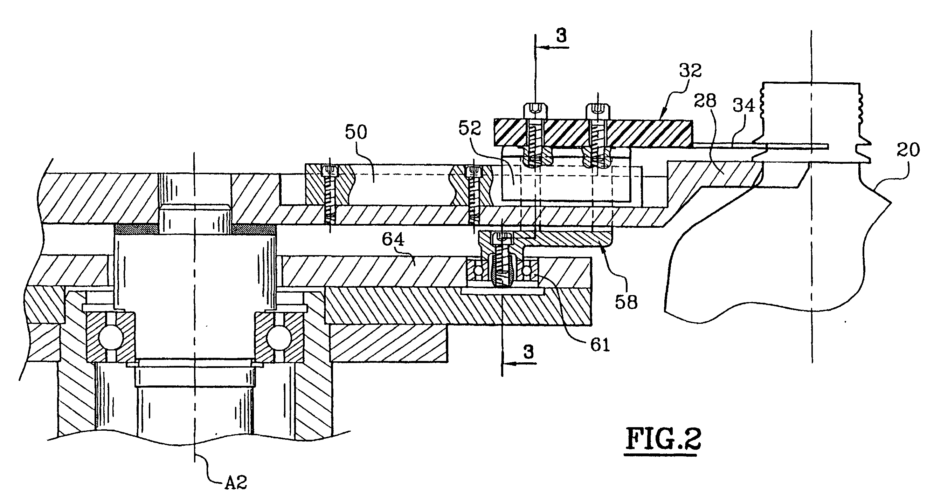

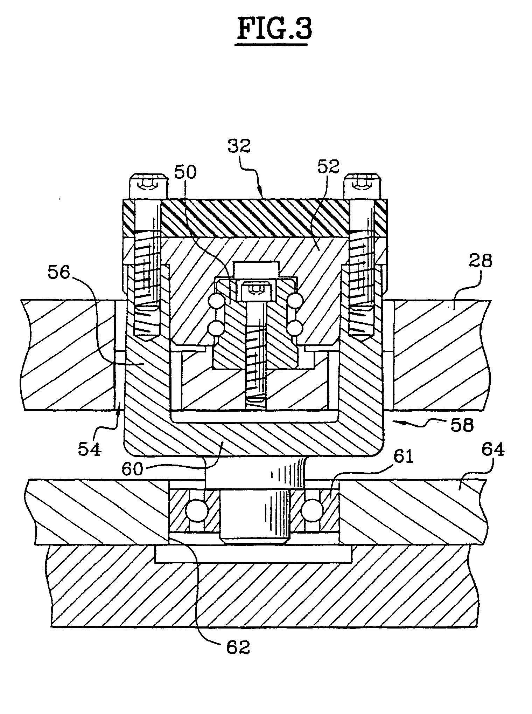

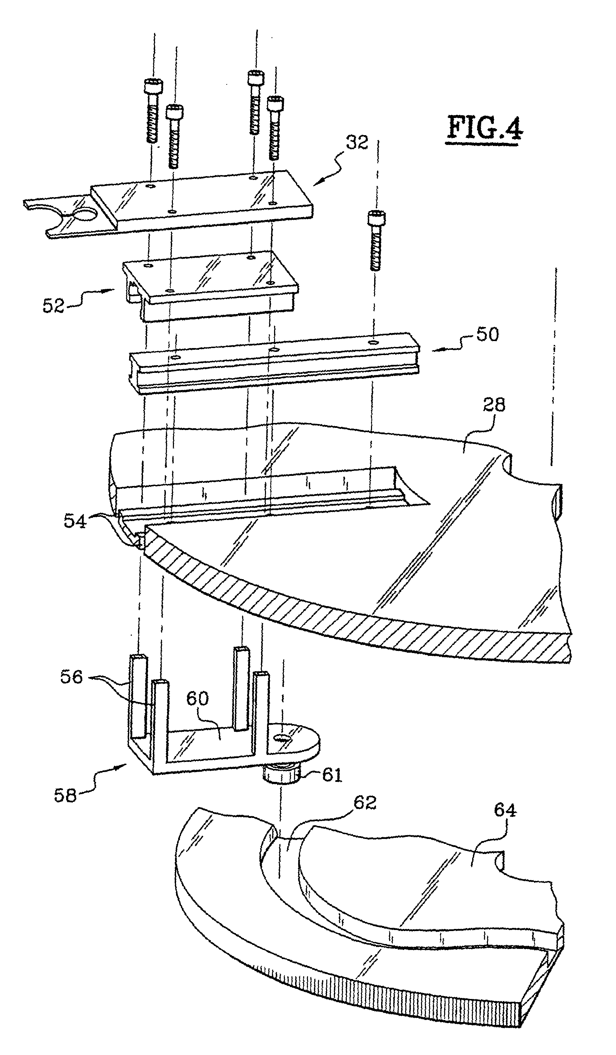

On a illustré sur les figures 2 à 4 de manière plus détaillée le mode de commande des déplacements des éléments de préhensions. Avantageusement, les deux roues d'entrée 26 et d'extraction 36 sont conçues de la même façon de sorte que la description qui va être faite d'un élément de préhension 32 de la roue d'entrée 26 s'applique aussi à un élément de préhension 42 de la roue d'extraction 36.

Pour chaque élément de préhension 32 de la roue d'entrée 26, le plateau 28 comporte un lamage rectangulaire dont la direction principale est orientée selon un rayon par rapport à l'axe A2 de la roue d'entrée 26. Sur la face supérieure de ce lamage, on trouve un rail 50 qui est orienté selon ce rayon et sur lequel un chariot 52 est monté à coulissement. L'élément de préhension 32 est fixé sur la face supérieure de ce chariot 52.

De part et d'autre du rail 50, le long des bords radiaux du lamage, le plateau 28 comporte deux fentes 54 qui traversent le plateau 28. Ces fentes 54 sont prévues pour permettre le passage des quatre pieds 56 d'un cavalier de commande 58 qui est destiné à être agencé en dessous du plateau 28. Le cavalier 58 comporte pour l'essentiel un élément de plaque 60 sensiblement horizontal depuis lequel les quatre pieds 56 s'étendent verticalement vers le haut au travers des fentes 54 pour être fixés sur le chariot 52 et/ou sur l'élément de préhension 32. Le cavalier 58 comporte aussi un galet 61 qui est agencé en dessous de l'élément de plaque est qui est mobile en rotation autour de son axe vertical. Le galet 61 est destiné à être reçu dans une gorge 62 formée dans la face supérieure d'une plaque fixe 64 agencée en dessous du plateau 28 de la roue d'entrée 26. La gorge 62 s'étend selon une trajectoire fermée autour de l'axe A2 de la roue d'entrée et les deux bords de la gorge 62 forment des chemins de came pour le galet 61. Le profil de la gorge 62 est illustré de manière schématique sur la figure 1.

De la sorte, lorsque le plateau 28 de la roue d'entrée est entraîné en rotation autour de l'axe A2, il entraîne avec lui le rail 50, le chariot 52, l'élément de préhension 32 et le cavalier de commande 58. De ce fait, le galet 61 parcoure la gorge 62 qui, par son profil, impose au chariot 52 et donc à l'élément de préhension 32 une position radiale déterminée en fonction de la position angulaire du plateau 28.

Le fonctionnement du système de convoyage selon l'invention est donc le suivant.

Un bras de transfert 18 saisit deux récipients dans un moule 12 et les amène sur la roue d'entrée 26, au niveau d'une zone de chargement. Les deux récipients 20 portés par le bras 18 sont engagés dans deux encoches consécutives de la roue d'entrée 26, cela sans ralentir la roue 26. Le bras 18 continue toutefois à tenir les récipients jusqu'à ce que leur col soit retenu entre le fond de l'encoche 30 et le guide 48. Le bras 18 relâche les récipients qui sont alors entraînés en rotation autour de l'axe A2 par la roue d'entrée 26.

Avant d'arriver au point de tangence, on peut voir que le profil de la gorge 62 provoque le déplacement des éléments de préhension 32 de la roue d'entrée vers leur position de préhension.

Grâce à la présence du guide 48, l'élément de préhension 32 peut être muni d'une pince 34 élastique qui s'engage en force autour du col du récipient sans le faire tomber de son encoche 30. En formant un appui pour les récipients, le guide 48 permet notamment de se passer de pinces commandées. Les pinces 34 peuvent ainsi être réalisées en une seule pièce en matière plastique déformable élastiquement.

Cependant, en variante, on pourrait prévoir que les éléments de préhension 32 de la roue d'entrée ne soient commandés vers leur position de préhension qu'au niveau du point de tangence. On pourrait alors éventuellement s'affranchir du guide 48.

Dans tous les cas, lorsqu'il arrive au point de tangence, un récipient 20, qui est reçu dans une encoche 30 à laquelle est associé un élément de préhension 32, se trouve retenu par ce dernier. Au point de tangence, ce récipient se trouve donc en regard d'un évidement 46 de la roue d'extraction de sorte qu'il n'y a aucune interaction entre ce récipient et la roue d'extraction. Ainsi, au-delà du point de tangence, le récipient reste maintenu, par l'élément de préhension 32, dans son encoche 30 de la roue d'entrée 26.

Au contraire, un récipient qui est reçu dans une encoche 30 qui n'est associée à aucun dispositif de préhension se trouve, au point de tangence, engagé simultanément dans une encoche 40 de la roue d'extraction. De plus, on peut voir sur la figure 1 que l'élément de préhension 42 associé à cette encoche 40 de la roue d'extraction est alors commandé vers sa position de préhension pour se saisir du récipient. On remarque que, dans cette position, le récipient est parfaitement maintenu par les deux plateaux 28, 38 de sorte que, là encore, on peut se passer de pinces commandées et utiliser des pinces 44 élastiques. De plus, on s'aperçoit qu'avec le dispositif proposé, on pourrait prévoir que les éléments de préhension 42 de la roue d'extraction ne soient pas mobiles radialement. Dans une version simplifiée de l'invention, ils pourraient être constitués de simples pinces élastiques directement fixées sur le plateau 38.

Les deux roues 26, 36 continuant de tourner, le récipient quitte l'encoche 30 de la roue d'entrée 26 car, au-delà du point de tangence, il est maintenu au fond de l'encoche 40 de la roue d'extraction 36 par l'élément de préhension 42 associé.

Ainsi, en aval du point de tangence, le flux de récipients se trouve séparé en deux séries dont l'une est portée par la roue d'entrée 26 et dont l'autre est porté par la roue d'extraction 36.

Sur la trajectoire de chacune de ces deux roues 26, 36, on a disposé, en aval du point deux tangence, deux organes de sortie 22, 24 chargés de récupérer les récipients 20 avant qu'ils n'aient effectué un tour complet sur la roue considérée.

La roue d'extraction est ainsi associée à un premier organe de sortie 22 qui est réalisé sous la forme d'une gouttière 68 comportant deux glissières parallèles entre lesquelles les récipients sont déposés par les éléments de préhension 42. Les récipients 20 se déplacent le long de cette gouttière du fait de la poussée exercée par chaque nouveau récipient déposé par la roue d'extraction 36.

Le deuxième organe de sortie 24 qui est associé à la roue d'entrée 26 comporte successivement une roue 74 à encoches tangente à la roue d'entrée 26 et une seconde gouttière 76 qui est agencée parallèlement à la première gouttière 68.

Dès que les éléments de préhension 32, 42 des deux roues d'entrée 26 et d'extraction 36 ont déposé le récipient qu'ils maintiennent sur l'organe de sortie correspondant, ils sont de nouveau commandés vers leur position escamotée radialement vers l'intérieur.

Comme on peut le voir, le système de convoyage ainsi décrit permet de séparer en deux le flux de récipients produits par l'installation de soufflage, ceci de manière particulièrement fiable grâce à des moyens simples et peu coûteux.

Dans l'exemple illustré, les récipients sont répartis à parts égales entre les deux organes de sortie 22, 24. Toutefois, de manière très simple on pourrait réaliser une répartition 2/3 1/3 en munissant par exemple deux encoches 30 sur trois de la roue d'entrée 26 d'éléments de préhension 32. La roue d'extraction comprendrait alors deux fois plus d'évidements 46 que d'encoches 40 associées à un élément de préhension 42.

Le système de commande des éléments de préhension à galet 61 et à gorge 62 est simple et peu coûteux mais on pourrait aussi prévoir de le remplacer par un système dans lequel chaque élément de préhension disposerait d'un actionneur motorisé. Dans ce cas, on pourrait prévoir que les deux roues soient munies du même nombre d'encoches, chaque encoche des deux roues étant munie d'un élément de préhension. Les éléments de préhension des deux roues seraient alors commandés de telle sorte que, au point de tangence, un seul des deux éléments de préhension en vis-à-vis serait amené vers sa position de préhension. Un tel dispositif permettrait de faire varier à volonté et en temps réel la répartition des récipients envoyés vers chacun des deux organes de sortie.

## Revendications

1. Système de convoyage d'entités discrètes comportant un dispositif de répartition comprenant une roue d'entrée (26) qui est entraînée en rotation de manière continue autour de son axe (A2) et qui est pourvue à sa périphérie d'une série de supports (30) dont chacun est apte à recevoir une entité (20), le dispositif de répartition permettant de répartir les entités (20) sur un premier organe de sortie (22) qui récupère, au-delà du point de tangence, les entités (20) précédemment saisies par des éléments secondaires de préhension (42) de la roue d'extraction (36); et sur un second organe de sortie (24) qui récupère les entités précédemment saisies par les moyens primaires de préhension (32) de la roue d'entrée (26)
**caractérisé en ce que** :
certains desdits supports du dispositif de répartition sont associés à un élément primaire de préhension (32) qui est mobile sur la roue d'entrée (26) entre une position escamotée et une position de préhension dans laquelle il est susceptible de saisir une entité présente sur le support associé (30), et **en ce que** le dispositif de répartition comporte une seule roue d'extraction (36) qui est tangente à la roue d'entrée (26) et qui est entraînée en rotation autour de son axe (A3),
des moyens de commande (61, 62) qui sont susceptibles de provoquer, entre une zone de chargement et le point de tangence des deux roues (26,36), le déplacement de chacun des éléments primaires de préhension (32) vers sa position de préhension de manière que l'élément (32) considéré saisisse une entité (20) reçue sur le support (30) associé,
les éléments secondaires de préhension (42) qui sont portés par la roue d'extraction (36) étant sont prévus pour saisir, au point de tangence, les entités (20) non saisies par un élément primaire de préhension (32).

2. Système selon la revendication 1, **caractérisé en ce que** chaque élément primaire de préhension (32) est commandé vers sa position de préhension à chaque tour de la roue d'entrée (26), entre la zone de chargement et la zone de tangence, et **en ce que** la roue d'extraction (36) comporte des éléments secondaires de préhension (42) uniquement en correspondance avec les supports (30) de la roue d'entrée (26) qui ne sont pas associés à un élément primaire de préhension (32).

3. Système selon l'une quelconque des revendications précédentes, **caractérisé en ce que** chaque élément primaire de préhension (32) de la roue d'entrée (26) est ramené vers sa position escamotée au niveau d'une zone de déchargement des entités (20) vers le second organe de sortie (24).

4. Système selon l'une quelconque des revendications précédentes, **caractérisé en ce que** les éléments secondaires de préhension (42) sont agencés de manière fixe à la périphérie de la roue d'extraction (36).

5. Système selon l'une quelconque des revendications 1 à 3, **caractérisé en ce que** les éléments secondaires de préhension (42) de la roue d'extraction (36) sont mobiles chacun entre une position escamotée et une position de préhension, **en ce qu'**ils sont associés chacun à un support (40) apte à supporter au moins en partie, entre la fin des moyens de guidage (48) et le point de tangence, une entité non saisie par les éléments primaire de préhension (32), et **en ce que** les éléments secondaires de préhension (42) sont commandés pour saisir une telle entité (20) sensiblement au niveau du point de tangence des deux roues (26, 36).

6. Système selon la revendication 5, **caractérisé en ce que** chaque élément secondaire de préhension (42) de la roue d'extraction (36) est ramené vers sa position escamotée au niveau d'une zone de déchargement des entités (20) vers le premier organe de sortie (22).

7. Système selon l'une quelconque des revendications précédentes, **caractérisé en ce qu'**il est prévu pour convoyer des récipients dont le col comporte au moins une collerette principale en excroissance radiale, et **en ce que** les supports de l'une au moins des roues d'entrée (26) ou d'extraction (36) sont formés chacun par le bord d'une encoche (30, 40) qui est taillée à la périphérie de la roue et dans laquelle le col du récipient est engagé au moins partiellement, la collerette venant en appui sur le bord de l'encoche.

8. Système selon la revendication 7, **caractérisé en ce qu'**il comporte, entre la zone de chargement et la zone de tangence des deux roues, des moyens de guidage fixes (48) maintiennent les entités (20) sur leur support (30) de la roue d'entrée (26).

9. Système selon l'une des revendications 7 ou 8, **caractérisé en ce que** les éléments primaires (32) et/ou secondaires (42) de préhension sont réalisés sous la forme de pinces (34, 44) aptes à saisir le col du récipient au-dessus de la collerette principale.

10. Système selon l'une quelconque des revendications 5 à 9, **caractérisé en ce que** les éléments de préhension mobiles (32, 42) sont montés à coulissement radial sur la roue (26, 36).

11. Système selon l'une des revendications 9 ou 10, **caractérisé en ce que** les pinces (34, 44) sont réalisées en une seule pièce en matière déformable élastiquement de manière à pouvoir s'encliqueter sur le col du récipient.

12. Système selon l'une quelconque des revendications précédentes, **caractérisé en ce que** la roue d'extraction (36) comporte à sa périphérie une série d'évidements (46) qui sont disposés de telle sorte que, à chaque passage au point de tangence des deux roues (26, 36), un support (30) de la roue d'entrée (26) qui comporte une élément primaire (32) associé se trouve radialement en regard d'un évidement (46) de la roue d'extraction (36).

13. Système selon l'une quelconque des revendications précédentes, **caractérisé en ce que** le dispositif de répartition est alimenté en entités par un organe d'alimentation (16) qui comporte au moins un bras de transfert rotatif (18).

14. Système selon la revendication 13, **caractérisé en ce que** le bras de transfert (18) transporte simultanément deux entités (20) qui sont amenées respectivement sur deux supports (30) agencés consécutivement à la périphérie de la roue d'entrée (26) du dispositif de répartition.

15. Système selon l'une quelconque des revendications précédentes, **caractérisé en ce que**, de deux supports (30) consécutifs de la roue d'entrée (26), seul un est associé à un élément primaire de préhension (32) de telle sorte que le système dirige les entités alternativement vers le premier (22) ou vers le second (24) organe de sortie.

16. Système selon l'une quelconque des revendications précédentes, **caractérisé en ce que** le premier organe de sortie (22) est réalisé sous la forme d'une gouttière de sortie (68).

17. Système selon l'une quelconque des revendications précédentes, **caractérisé en ce que** le second organe de sortie (24) comporte une roue à encoches (74).

18. Installation de soufflage de récipients en matière thermoplastique, **caractérisée en ce qu'**elle comporte, en aval d'une unité de soufflage, un système de convoyage de récipients selon l'une quelconque des revendications précédentes.

## Claims

1. System for the conveyance of discrete entities which comprises a distribution device comprising an entry wheel (26) which is driven in rotation continuously about its axis (A2) and which is provided on its periphery with a series of supports (30), each of which is capable of receiving an entity (20), the distribution device making it possible to distribute the entities (20) to a first exit member (22) which, beyond the tangency point, recovers the entities (20) previously grasped by secondary gripping elements (42) of the extraction wheel (36), and to a second exit member (24) which recovers the entities previously grasped by the primary gripping means (32) of the entry wheel (26), **characterized in that** some of the said supports of the distribution device are associated with a primary gripping element (32) which is movable on the entry wheel (26) between a retracted position and a gripping position, in which it is capable of grasping an entity present on the associated support (30), and **in that** the distribution device comprises a single extraction wheel (36) which is tangent to the entry wheel (26) and which is driven in rotation about its axis (A3), and control means (61, 62) which are capable of bringing about, between a loading zone and the tangent point of the two wheels (26, 36), the displacement of each of the primary gripping elements (32) towards its gripping position, in such a way that the element (32) in question grasps an entity (20) received on the associated support (30), the secondary gripping elements (42) which are carried by the extraction wheel (36) being provided in order, at the tangent point, to grasp the entities (20) not grasped by a primary gripping element (32).

2. System according to Claim 1, **characterized in that** each primary gripping element (32) is controlled towards its gripping position, at each revolution of the entry wheel (26), between the loading zone and the tangent zone, and **in that** the extraction wheel (36) comprises secondary gripping elements (42) corresponding solely to the supports (30) of the entry wheel (26) which are not associated with a primary gripping element (32).

3. System according to either one of the preceding claims, **characterized in that** each primary gripping element (32) of the entry wheel (26) is returned towards its retracted position in the region of a zone for unloading the entities (20) towards the second exit member (24).

4. System according to any one of the preceding claims, **characterized in that** the secondary gripping elements (42) are arranged fixedly on the periphery of the extraction wheel (36).

5. System according to any one of Claims 1 to 3, **characterized in that** the secondary gripping elements (42) of the extraction wheel (36) are each movable between a retracted position and a gripping position, **in that** they are each associated with a support (40) capable of at least partially supporting, between the end of the guide means (48) and the tangent point, an entity not grasped by the primary gripping elements (32), and **in that** the secondary gripping elements (42) are controlled in order to grasp such an entity (20) substantially in the region of the tangent point of the two wheels (26, 36).

6. System according to Claim 5, **characterized in that** each secondary gripping element (42) of the extraction wheel (36) is returned towards its retracted position in the region of a zone for unloading the entities (20) towards the first exit member (22).

7. System according to any one of the preceding claims, **characterized in that** it is provided for the conveyance of containers, the neck of which comprises at least one main collar in radial protuberance, and **in that** the supports of at least one of the entry (26) or extraction (36) wheels are each formed by the edge of a notch (30, 40) which is cut on the periphery of the wheel and into which the neck of the container is at least partially engaged, the collar coming to bear on the edge of the notch.

8. System according to Claim 7, **characterized in that** it comprises, between the loading zone and the tangent zone of the two wheels, fixed guide means (48) which maintain the entities (20) on their support (30) of the entry wheel (26).

9. System according to either one of Claims 7 and 8, **characterized in that** the primary (32) and/or secondary (42) gripping elements are produced in the form of pincers (34, 44) capable of grasping the neck of the container above the main collar.

10. System according to any one of Claims 5 to 9, **characterized in that** the movable gripping elements (32, 42) are mounted radially slidably on the wheel (26, 36).

11. System according to either one of Claims 9 and 10, **characterized in that** the pincers (34, 44) are produced in one piece from elastically deformable material, so as to be capable of being snapped onto the neck of the container.

12. System according to any one of the preceding claims, **characterized in that** the extraction wheel (36) comprises, on its periphery, a series of recesses (46) which are arranged in such a way that, at each pass at the tangency point of the two wheels (26, 36), a support (30) of the entry wheel (26) which comprises an associated primary element (32) is radially opposite a recess (46) of the extraction wheel (36).

13. System according to any one of the preceding claims, **characterized in that** the distribution device is fed with entities by a feed member (16) which comprises at least one rotary transfer arm (18).

14. System according to Claim 13, **characterized in that** the transfer arm (18) simultaneously transports two entities (20) which are delivered respectively to two supports (30) arranged consecutively on the periphery of the entry wheel (26) of the distribution device.

15. System according to any one of the preceding claims, **characterized in that**, of two consecutive supports (30) of the entry wheel (26), only one is associated with a primary gripping element (32), in such a way that the system directs the entities alternately towards the first (22) or towards the second (24) exit member.

16. System according to any one of the preceding claims, **characterized in that** the first exit member (22) is produced in the form of an exit trough (68).

17. System. according to any one of the preceding claims, **characterized in that** the second exit member (24) comprises a notched wheel (74).

18. Thermal plastic container blowing installation, **characterized in that** it comprises, downstream of a blowing unit, a system for the conveyance of containers according to any one of the preceding claims.

## Patentansprüche

1. System zur Beförderung diskreter Einheiten mit einer Verteilungsvorrichtung, die ein Eingangsrad (26) umfasst, das kontinuierlich um seine Achse (A2) in Drehung versetzt wird und das an seiner Peripherie mit einer Reihe von Trägern (30) versehen ist, von denen jeder in der Lage ist, eine Einheit (20) aufzunehmen, wobei die Verteilungsvorrichtung die Verteilung der Einheiten (20) auf ein erstes Austrittsorgan (22), das jenseits des Berührungspunkts die zuvor durch sekundäre Greifelemente (42) des Entnahmerades (36) ergriffenen Einheiten (20) aufnimmt, und auf ein zweites Austrittsorgan (24), das die zuvor durch die primären Greifelemente (32) des Eingangsrades (26) ergriffenen Einheiten aufnimmt, erlaubt,
**dadurch gekennzeichnet, dass**:
bestimmte Träger der Verteilungsvorrichtung mit einem primären Greifelement (32) verknüpft sind, das auf dem Eingangsrad (26) zwischen einer eingefahrenen Position und einer Greifposition beweglich ist, in der es eine auf dem zugehörigen Träger (30) vorhandene Einheit ergreifen kann, und dass die Verteilungsvorrichtung folgendes umfasst:
ein einzelnes Entnahmerad (36), das das Eingangsrad (26) berührt und das um seine Achse (A3) in Drehung versetzt wird,
Betätigungselemente (61, 62), die zwischen einem Beschickungsbereich und dem Berührungspunkt der zwei Räder (26, 36) die Bewegung jedes primären Greifelements (32) in seine Greifposition bewirken können, so dass das betreffende Element (32) eine auf dem zugehörigen Träger (30) aufgenommene Einheit (20) ergreift,
wobei die durch das Entnahmerad (36) getragenen sekundären Greifelemente (42) dafür vorgesehen sind, am Berührungspunkt die nicht durch ein primäres Greifelement (32) ergriffenen Einheiten (20) zu ergreifen.

2. System nach Anspruch 1, **dadurch gekennzeichnet, dass** jedes primäre Greifelement (32) bei jeder Umdrehung des Eingangsrades (26) zwischen dem Beschickungsbereich und dem Berührungsbereich in seine Greifposition gebracht wird und dass das Entnahmerad (36) sekundäre Greifelemente (42) aufweist, die nur den Trägern (30) des Eingangsrades (26), die nicht mit einem primären Greifelement (32) verknüpft sind, zugeordnet sind.

3. System nach einem der vorhergehenden Ansprüche, **dadurch gekennzeichnet, dass** jedes primäre Greifelement (32) des Eingangsrades (26) auf Höhe eines Bereichs zur Entladung der Einheiten (20) in das zweite Austrittsorgan (24) in seine eingefahrene Position verbracht wird.

4. System nach einem der vorhergehenden Ansprüche, **dadurch gekennzeichnet, dass** die sekundären Greifelemente (42) auf feste Weise an der Peripherie des Entnahmerades (36) angebracht sind.

5. System nach einem der Ansprüche 1 bis 3, **dadurch gekennzeichnet, dass** die sekundären Greifelemente (42) des Entnahmerades (36) jeweils zwischen einer eingefahrenen Position und einer Greifposition beweglich sind, dass sie jeweils mit einem Träger (40) verknüpft sind, der zumindest teilweise zwischen dem Ende der Führungsmittel (48) und dem Berührungspunkt eine nicht durch die primären Greifelemente (32) ergriffene Einheit tragen kann, und dass die sekundären Greifelemente (42) so betätigt werden, dass sie eine derartige Einheit (20) im Wesentlichen auf Höhe des Berührungspunktes der zwei Räder (26, 36) ergreifen.

6. System nach Anspruch 5, **dadurch gekennzeichnet, dass** jedes sekundäre Greifmittel (42) des Entnahmerades (36) auf Höhe eines Bereichs zur Entladung der Einheiten (20) in das Austrittsorgan (22) in seine eingefahrene Position verbracht wird.

7. System nach einem der vorhergehenden Ansprüche, **dadurch gekennzeichnet, dass** es dafür vorgesehen ist, Behälter zu befördern, deren Hals zumindest einen radial auskragenden Hauptbund aufweist, und dass die Träger von zumindest dem Eingangsrad (26) oder dem Entnahmerad (36) jeweils durch den Rand einer Vertiefung (30, 40) gebildet werden, die an der Peripherie des Rades eingeschnitten ist und in die der Hals des Behälters zumindest teilweise eingreift, wobei der Bund an dem Rand der Vertiefung zur Anlage kommt.

8. System nach Anspruch 7, **dadurch gekennzeichnet, dass** es zwischen dem Beschickungsbereich und dem Berührungsbereich der zwei Räder feste Führungsmittel (48) umfasst, die die Einheiten (20) auf ihrem Träger (30) des Eingangsrades (26) halten.

9. System nach Anspruch 7 oder 8, **dadurch gekennzeichnet, dass** diese primären (32) und/oder sekundären (42) Greifelemente in Form von Klammern (34, 44) realisiert sind, die in der Lage sind, den Hals des Behälters über dem Hauptbund zu halten.

10. System nach einem der Ansprüche 5 bis 9, **dadurch gekennzeichnet, dass** die Greifelemente (32, 42) radial gleitend auf dem Rad (26, 36) montiert sind.

11. System nach Anspruch 9 oder 10, **dadurch gekennzeichnet, dass** die Klammern (34, 44) einstückig aus elastisch verformbarem Material so hergestellt sind, dass sie auf dem Hals des Behälters einrasten können.

12. System nach einem der vorhergehenden Ansprüche, **dadurch gekennzeichnet, dass** das Entnahmerad (36) an seiner Peripherie eine Reihe von Ausnehmungen (46) umfasst, die so angeordnet sind, dass bei jedem Durchgang durch den Berührungspunkt der zwei Räder (26, 36) ein Träger (30) des Eingangsrades (26), der ein zugehöriges primäres Element (32) aufweist, sich radial gegenüber einer Ausnehmung (46) des Entnahmerades (36) befindet.

13. System nach einem der vorhergehenden Ansprüche, **dadurch gekennzeichnet, dass** die Verteilungsvorrichtung durch ein Zuführorgan (16) mit Einheiten beschickt wird, das zumindest einen drehbaren Übertragungsarm (18) umfasst.

14. System nach Anspruch 13, **dadurch gekennzeichnet, dass** der Übertragungsarm (18) gleichzeitig zwei Einheiten (20) transportiert, die jeweils zu zwei Trägern (30) gebracht werden, die nacheinander an der Peripherie des Eingangsrades (26) der Verteilungsvorrichtung angeordnet sind.

15. System nach einem der vorhergehenden Ansprüche, **dadurch gekennzeichnet, dass** von den zwei aufeinanderfolgenden Trägern (30) des Eingangsrades (26) nur einer mit einem primären Greifelement (32) verknüpft ist, so dass das System die Einheiten abwechselnd zu dem ersten (22) oder dem zweiten (24) Austrittsorgan lenkt.

16. System nach einem der vorhergehenden Ansprüche, **dadurch gekennzeichnet, dass** das erste Austrittsorgan (22) in Form einer Austrittsrinne (68) realisiert ist.

17. System nach einem der vorhergehenden Ansprüche, **dadurch gekennzeichnet, dass** das zweite Austrittsorgan (24) ein Rad mit Vertiefungen (74) umfasst.

18. Anlage zum Blasen von Behältern aus thermoplastischem Material, **dadurch gekennzeichnet, dass** sie stromabwärts von einer Blaseinheit ein Behälterfördersystem nach einem der vorhergehenden Ansprüche umfasst.
